# DEMANDE DE BREVET EUROPEEN

(11) **EP 4 668 185 A1**
(43) Date de publication de la demande: **24.12.2025**
(21) Numéro de dépôt: 25183996.5
(22) Date de dépôt: 19.06.2025
(51) Int. Cl.: G06Q 20/02, G06Q 20/06, G06Q 20/22, G06Q 20/38, G06Q 40/03, G06Q 40/04, H04L 9/00

(54) **PROCÉDÉ POUR LA MISE EN OEUVRE D'UNE TRANSACTION D'UN PREMIER MONTANT EN UNE MONNAIE FIDUCIAIRE ENTRE UN PREMIER UTILISATEUR ET UN DEUXIÈME UTILISATEUR**

(30) Priorité: 19.06.2024 FR 2406545
(71) Demandeur: Worldline, 92800 Puteaux (FR)
(72) Inventeur: LACOMBE, Jean Paul, 92800 Puteaux (FR)
(74) Mandataire: Germain Maureau

(57) **Abrégé**

La présente invention concerne un procédé pour la mise en œuvre d'une transaction d'un premier montant, comprenant la mise en œuvre d'étapes de :
(a) Emission d'une requête de crédit d'un compte transitoire, à hauteur d'un deuxième montant supérieur ou égal audit premier montant ;
(b) Mise en œuvre d'une transaction sur une blockchain de création d'une troisième quantité d'un premier jeton fongible transférable dans ladite blockchain, ladite troisième quantité dudit premier jeton fongible étant entre une première quantité correspondant audit premier montant et une deuxième quantité correspondant audit deuxième montant ;
(c) Mise en œuvre d'une transaction sur ladite blockchain de transfert de ladite première quantité dudit premier jeton fongible ;
(d) Transfert dudit premier montant en ladite monnaie fiduciaire depuis ledit compte transitoire vers un compte d'un deuxième utilisateur ;
(e) Mise en œuvre d'une transaction sur ladite blockchain de destruction de ladite première quantité du jeton fongible transférée.

## Description

### DOMAINE TECHNIQUE GÉNÉRAL

La présente invention se rapporte au domaine des bases de données de type chaine de blocs. Plus précisément, elle concerne un procédé pour la mise en œuvre d'une transaction d'un premier montant en une monnaie fiduciaire entre un premier utilisateur et un deuxième utilisateur via une telle base de données de type chaine de blocs.

### ETAT DE L'ART

Les bases de données de type chaine de bloc (« blockchains ») sont utilisées quotidiennement pour échanger des jetons (« tokens ») tels que des cryptomonnaies, d'une manière quasi-instantanée, fiable et sécurisée.

Il est souhaitable d'utiliser ces propriétés de la blockchain pour réaliser des transactions de type paiement (alors appelés « on-chain »), mais le problème est qu'on ne peut pas transférer directement de la monnaie fiduciaire (dit monnaie fiat) directement sur la blockchain.

La solution classique est d'utiliser une cryptomonnaie stable (« stablecoin »), c'est-à-dire une cryptomonnaie dont le prix est arrimé à une monnaie fiduciaire, tel que l'USDC adossé au dollar US (chaque jeton valant en théorie 1$), ou un token de dépôt (« deposit token » c'est-à-dire un token émis par une institution de dépôt comme une banque) d'une valeur garantie par ladite institution. Les stable/deposit tokens sont désignés « S/DT ».

Cette solution requiert l'obtention par l'utilisateur à l'origine de la transaction d'une quantité de jetons avec de la monnaie fiat (par achat ou dépôt), puis le transfert de ces jetons au destinataire de la transaction, qui va enfin soit les échanger contre de la monnaie fiat soit les conserver pour d'éventuelles transactions à venir.

Le fait d'utiliser un S/DT permet de se prémunir contre toute fluctuation de valeur du jeton pendant la transaction, mais présente un certain nombre de désavantages :
- chacune des étapes est associé à des frais pour l'une ou l'autre des parties, que ce soit pour disposer de S/DT ou pour les échanger contre de la monnaie fiat ;
- plus risqué car les institutions financières ayant la garde de l'équivalent en monnaie fiat des stable/deposit tokens peuvent être en difficultés financières voire en défaut de paiement. Le « stablecoin » USDC a connu un tel risque en mars 2023 suite aux difficultés de la Silicon Valley Bank, dans laquelle étaient conservés un tiers des réserves en dollar US de l'USDC ;
- le détenteur de S/DT ne bénéficie plus des mêmes garanties financières (garantie des dépôts) ni des mêmes conditions de rémunération de ses dépôts que celles de sa banque habituelle;
- les banques habituelles des détenteurs de S/DT doivent faire face à une réduction de leurs dépôts à vue ce qui impacte leur bilan.

On connait également des solutions avec des monnaies fiduciaires directement tokénisées de type CBDC (« Central Bank Digital Currency »), voir par exemple le brevet US11354662.

Ces monnaies sont garanties par une banque centrale, mais encore rares aujourd'hui, et surtout le problème de la double conversion reste présent.

La présente invention vient améliorer la situation.

### PRÉSENTATION DE L'INVENTION

La présente invention se rapporte donc selon un premier aspect à un procédé pour la mise en œuvre d'une transaction d'un premier montant en une monnaie fiduciaire entre un premier utilisateur et un deuxième utilisateur, comprenant la mise en œuvre d'étapes de :
(a) Emission depuis un premier équipement du premier utilisateur d'une requête de crédit d'un compte transitoire géré par un serveur connecté au moins au premier équipement par un réseau, à hauteur d'un deuxième montant en ladite monnaie fiduciaire supérieur ou égal audit premier montant ;
(b) Mise en œuvre par ledit serveur d'une transaction sur une base de données de type chaine de blocs de création au profit du premier utilisateur d'une troisième quantité d'un premier jeton fongible transférable dans ladite base de données de type chaine de blocs, ladite troisième quantité dudit premier jeton fongible étant entre une première quantité correspondant audit premier montant et une deuxième quantité correspondant audit deuxième montant ;
(c) Mise en œuvre par ledit serveur d'une transaction sur ladite base de données de type chaine de blocs de transfert, du premier utilisateur vers le deuxième utilisateur, de ladite première quantité dudit premier jeton fongible ;
(d) Transfert par le serveur dudit premier montant en ladite monnaie fiduciaire depuis ledit compte transitoire vers un compte du deuxième utilisateur ;
(e) Mise en œuvre par ledit serveur d'une transaction sur ladite base de données de type chaine de blocs de destruction de ladite première quantité du jeton fongible transférée au deuxième utilisateur.

Selon des caractéristiques avantageuses et non limitatives :
L'étape (a) comprend l'authentification du premier utilisateur sur le premier équipement et l'authentification du deuxième utilisateur sur un deuxième équipement du deuxième utilisateur également connecté au premier équipement via ledit réseau, de sorte à confirmer le consentement des premier et deuxième utilisateurs à mettre en œuvre ladite transaction dudit premier montant en la monnaie fiduciaire.

Ladite requête de crédit d'un compte transitoire géré par le serveur est une requête de transfert dudit deuxième montant en la monnaie fiduciaire depuis un compte bancaire du premier utilisateur vers ledit compte transitoire.

Ladite requête de crédit d'un compte transitoire géré par le serveur est une requête de prélèvement par ledit serveur dudit deuxième montant depuis ledit compte bancaire du premier utilisateur.

L'émission de ladite requête de crédit est déclenchée par les authentifications des premier et deuxième utilisateurs et le deuxième montant est égal au premier montant.

L'émission de ladite requête de crédit est mise en œuvre de manière anticipée et l'étape (b) est déclenchée par les authentifications des premier et deuxième utilisateurs.

La troisième quantité est égale à la deuxième quantité.

L'étape (e) comprend en outre, si le deuxième montant est strictement supérieur au premier montant, le transfert par le serveur de la différence entre les premier et deuxième montants en ladite monnaie fiduciaire depuis ledit compte transitoire vers un compte du premier utilisateur.

Lesdits premiers jetons fongibles sont des jetons verrouillés pour les premier et deuxième utilisateurs.

Le procédé comprend une étape (a0) de mise en œuvre par ledit serveur d'une transaction sur ladite base de données de type chaine de blocs de création au profit du premier utilisateur d'une quatrième quantité d'un deuxième jeton fongible transférable dans ladite base de données de type chaine de blocs, ladite quatrième quantité correspondant à un solde d'un compte bancaire dudit premier utilisateur.

L'étape (c) comprend la mise en œuvre par ledit serveur d'une transaction sur ladite base de données de type chaine de blocs de transfert, du premier utilisateur vers le deuxième utilisateur, d'une cinquième quantité dudit deuxième jeton fongible correspondant au premier montant.

Le procédé comprend, si ledit solde du compte bancaire dudit premier utilisateur a varié, une étape (a1) de mise en œuvre par ledit serveur d'une transaction sur ladite base de données de type chaine de blocs de mise à jour de ladite quatrième quantité du deuxième jeton fongible du premier utilisateur, de sorte à correspondre au solde du compte bancaire dudit premier utilisateur.

L'étape (a0) comprend une demande d'accès du serveur audit compte bancaire du premier utilisateur.

Ledit premier jeton fongible et ledit deuxième jeton fongible représentent la même valeur en ladite monnaie fiduciaire de sorte que la première quantité du premier jeton fongible est égale à la cinquième quantité du deuxième jeton fongible.

Au moins les étapes (b), (c) et (e) sont mises en œuvre au moyen d'un contrat intelligent.

Le procédé comprend la mise en œuvre d'une étape (f) de mise en œuvre d'une action par ledit deuxième utilisateur en contrepartie de la transaction.

Selon un deuxième aspect, l'invention propose un serveur, caractérisé en ce qu'il comprend des moyens de traitement de données configurés pour, lors d'une transaction d'un premier montant en une monnaie fiduciaire entre un premier utilisateur et un deuxième utilisateur :
- suite à l'émission depuis un premier équipement du premier utilisateur connecté audit serveur par un réseau d'une requête de crédit d'un compte transitoire géré par ledit serveur, à hauteur d'un deuxième montant en ladite monnaie fiduciaire supérieur ou égal audit premier montant, mettre en œuvre une transaction sur une base de données de type chaine de blocs de création au profit du premier utilisateur d'une troisième quantité d'un premier jeton fongible transférable dans ladite base de données de type chaine de blocs, ladite troisième quantité dudit premier jeton fongible étant entre une première quantité correspondant audit premier montant et une deuxième quantité correspondant audit deuxième montant ;
- mettre en œuvre une transaction sur ladite base de données de type chaine de blocs de transfert, du premier utilisateur vers le deuxième utilisateur, de ladite première quantité dudit premier jeton fongible ;
- transférer ledit premier montant en ladite monnaie fiduciaire depuis ledit compte transitoire vers un compte du deuxième utilisateur ;
- mettre en œuvre une transaction sur ladite base de données de type chaine de blocs de destruction de ladite première quantité du jeton fongible transférée au deuxième utilisateur.

Selon un troisième aspect, l'invention propose un ensemble du serveur selon le deuxième aspect et du premier équipement configuré pour émettre ladite requête de crédit d'un compte transitoire géré par ledit serveur, à hauteur du deuxième montant.

Selon un quatrième et un cinquième aspect, l'invention concerne un produit programme d'ordinateur comprenant des instructions de code pour l'exécution d'un procédé selon le premier aspect pour la mise en œuvre d'une transaction d'un premier montant en une monnaie fiduciaire entre un premier utilisateur et un deuxième utilisateur ; et un moyen de stockage lisible par un équipement informatique sur lequel est enregistré un produit programme d'ordinateur comprenant des instructions de code pour l'exécution d'un procédé selon le premier aspect pour la mise en œuvre d'une transaction d'un premier montant en une monnaie fiduciaire entre un premier utilisateur et un deuxième utilisateur.

### PRÉSENTATION DES FIGURES

D'autres caractéristiques et avantages de la présente invention apparaîtront à la lecture de la description qui va suivre d'un mode de réalisation préférentiel. Cette description sera donnée en référence aux dessins annexés dans lesquels :
[Fig. 1] la figure 1 est un schéma d'un système pour la mise en œuvre du procédé selon l'invention ;
[Fig.2a] la figure 2a est un logigramme illustrant les étapes d'un premier mode de réalisation du procédé selon l'invention ;
[Fig.2b] la figure 2b est un logigramme illustrant les étapes d'un deuxième mode de réalisation du procédé selon l'invention.

### DESCRIPTION DÉTAILLÉE

### Architecture

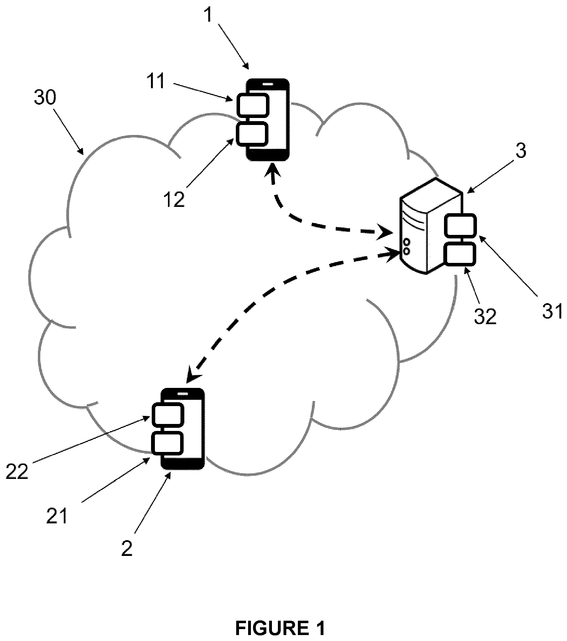

La présente invention concerne un procédé de mise en œuvre d'une transaction d'un premier montant en une monnaie fiduciaire entre un premier utilisateur et un deuxième utilisateur, dans un système tel que représenté sur la **figure 1****.**

Comme l'on verra, ladite transaction implique une base de donnée de type chaîne de blocs (« blockchain »), permettant une technologie de grand livre distribué (« DLT »), de manière tout à fait transparente pour les utilisateurs (mais pas nécessairement immédiatement visible, i.e. sans complexifier la transaction pour l'utilisateur).

Ledit système comprend au moins un équipement client 1, 2 (généralement un grand nombre d'entre eux), en particulier un premier équipement client 1 du premier utilisateur et un deuxième équipement client 2 du deuxième utilisateur, chacun étant un dispositif personnel de l'utilisateur lui permettant d'effectuer des transactions en son nom, i.e. d'initier/accepter les transactions. En particulier, on supposera que les utilisateurs disposent de moyens de paiement en ladite monnaie fiduciaire et en particulier de comptes bancaires (premier compte pour le premier utilisateur et deuxième compte pour le deuxième utilisateur), gérables via leur équipement client 1, 2, le cas échéant en utilisant une application dédiée (tel que l'application de leur banque).

Par ailleurs, chaque équipement client 1, 2 joue avantageusement un rôle de « wallet », c'est-à-dire de portefeuille numérique pour par exemple envoyer ou recevoir des jetons fongibles transférables sur ladite blockchain conformément au présent procédé, voire des cryptomonnaies et/ou des jetons non fongibles tels que des NFTs (transférables sur d'autres blockchains). Un wallet stocke généralement une clé privée de son utilisateur, et est désigné par une adresse qui est typiquement une empreinte cryptographique de la clé publique correspondant à la clé privée.

Alternativement, les wallets de chacun des utilisateurs peuvent être gérés de manière décentralisée, notamment par un serveur 3 d'un tiers de confiance, connecté aux équipements 1, 2. Ledit serveur 3 est typiquement un serveur distant et automatisé tel qu'une plateforme de gestion de transactions ou un serveur bancaire. En particulier, le serveur 3 peut créer et gérer les wallets pour le compte des clients ainsi qu'un compte bancaire transitoire qu'on décrira plus loin. On notera que le compte bancaire transitoire peut être totalement indépendant desdits comptes bancaires, i.e. ouverts auprès de banques différentes.

On a dans tous les cas en particulier au moins un premier équipement client 1 dit créditeur en tant que dispositif d'un premier utilisateur « acheteur » dans ladite transaction (destinataire de la transaction), et avantageusement un deuxième équipement client 2 dit débiteur en tant que dispositif d'un deuxième utilisateur « vendeur » dans ladite transaction (à l'origine de la transaction).

Ladite transaction d'un premier montant en une monnaie fiduciaire peut ainsi être un paiement (et alors le premier utilisateur attend une contrepartie de la part du deuxième utilisateur tel qu'un produit un service objet de la transaction, et par exemple un actif numérique tel qu'un jeton non fongible selon un mode de réalisation qui sera décrit plus loin).

Alternativement, ladite transaction peut être un simple transfert d'argent, i.e. un virement, notamment un don ou un dépôt.

On notera bien que ladite transaction est en une monnaie fiduciaire, i.e. une devise officielle donnée (par exemple 1000€), et pas en une cryptomonnaie, dont le cours peut fluctuer. L'objectif ici est d'éviter le passage par une cryptomonnaie et notamment par un jeton S/DT, de sorte que le premier utilisateur paie exactement ledit premier montant, à des éventuels frais bancaires près (qui seraient du même ordre que pour tout autre transfert d'argent tel qu'un virement), mais sans devoir subir des frais supplémentaires d'échange entre monnaie fiduciaire et jetons et/ou des éventuelles variations de cours, ni supporter des risques de contrepartie réduisant fortement la valeur des jetons.

Pour résumer, ledit premier montant de monnaie fiduciaire est transféré du premier utilisateur au deuxième utilisateur, le premier utilisateur et/ou le deuxième utilisateur peut optionnellement payer en sus des frais bancaires, et l'éventuelle contrepartie de la transaction est transférée du deuxième utilisateur au premier utilisateur.

Dans le présent cas, chaque équipement client 1, 2 est préférentiellement un dispositif physique léger tel qu'une carte à puce ou un terminal tel qu'un smartphone, en particulier un élément de sécurité (Secure Element) d'un tel terminal, c'est-à-dire un microprocesseur dédié fermé de type enclave. On comprendra que la présente invention n'est pas limitée à ces cas et que chaque équipement client 1, 2 peut toujours être un smartphone, une tablette tactile, un ordinateur personnel, etc. Chaque équipement client 1, 2 peut en outre comprendre des moyens d'acquisition d'un trait biométrique tel qu'une caméra ou un lecteur d'empreintes digitales.

Dans tous les cas, le premier équipement 1, le deuxième équipement 2 et le serveur 3 comportent des moyens de traitement de données 11, 21, 31, i.e. un calculateur tel que par exemple un processeur, un microprocesseur, un contrôleur, un microcontrôleur, un FPGA etc. Ces calculateurs sont adaptés pour exécuter des instructions de code pour mettre en œuvre le procédé ci-après.

Le premier équipement 1, le deuxième équipement 2 et/ou le serveur 3 peuvent également comprendre des moyens de stockage de données 12, 22, 32 (une mémoire, par exemple flash) éventuellement une interface utilisateur (typiquement un écran tactile), etc.

Les équipements 1, 2 communiquent entre eux et avec le serveur 3 par l'intermédiaire d'au moins un réseau 30 par exemple le réseau Internet, un réseau cellulaire, ou une combinaison de tels réseaux. Les équipements 1, 2 et/ou le serveur 3 ont accès en lecture et en écriture à une base de données de type chaîne de blocs stockée dans le réseau 30. On note qu'on peut également avoir dans le même cas des nœuds de stockage (des dispositifs valideurs de transactions, appelés « mineurs », qui sont connus de l'homme du métier), mais alternativement, le serveur 3 peut lui-même assurer, le cas échéant seul, le rôle de nœud.

Une base de données de type chaîne de blocs est en effet potentiellement distribuée entre plusieurs nœuds de stockage, et les nœuds de stockage sont configurés pour valider des données écrites dans la base de données par la mise en œuvre d'une méthode de recherche de consensus entre les nœuds de stockage. Une telle méthode est par exemple la « preuve de travail » ou POW (« proof of work »), ou la « preuve d'enjeu « ou POS (« proof of stake »). Le contenu de la base de données (un historique de toutes les transactions passées effectuées entre des utilisateurs du système) est ainsi protégé contre des falsifications et ce malgré son éventuel caractère distribué.

Les plus célèbres bases de données de type chaines de blocs sont les blockchain Bitcoin^{®} ou Ethereum^{®}, ou toute autre blockchain compatible.

La base de données peut être publique, au sens où elle est libre d'accès en lecture non seulement par les équipements 1, 2, 3 en présence mais également à tout autre dispositif tiers (ce qui est le cas des blockchains susmentionnées). Tout dispositif tiers peut alors en particulier consulter les données des transactions précédemment mise en œuvre de sorte à s'assurer qu'une transaction a bien été mise en œuvre dans les conditions prévues.

Alternativement, la base de données peut être « privée », i.e. elle n'est pas accessible à des utilisateurs tiers, et n'est potentiellement pas distribuée mais entièrement gérée par le serveur 3, si l'on préfère que les transactions soient garanties (par le serveur 3) mais restent confidentielles.

Le présent procédé utilise au moins un premier jeton fongible transférable sur ladite blockchain, qu'on appellera vCoin1 (ou simplement vCoin-L pour « locked »), et/ou un deuxième jeton fongible également transférable sur ladite blockchain, qu'on appellera vCoin2. On verra plus loin leurs différences. Par jeton fongible, on entend un type de jeton cryptographique non-unique et interchangeable (on ne peut pas faire la différence entre deux vCoins), au même titre qu'une cryptomonnaie. On notera que lesdits premier et deuxième jetons fongibles sont des jetons purement utilitaires (dit jetons « techniques », ou « technical tokens » ou encore « settlement tokens ») qui représentent une valeur prédéfinie mais qui ne peuvent pas être échangés de manière libre avec de la monnaie fiduciaire. On comprend que lesdits premier et deuxième jetons fongibles ne sont ni des monnaies fiduciaires tokénisées ni des cryptomonnaies. En d'autres les termes, lesdits jetons ne font que représenter une valeur d'un point de vue mathématique, mais n'ont pas cette valeur. En pratique toutes les transactions en lesdits premier ou deuxième jeton fongibles sont contrôlées par le serveur 3.

Par opposition, un jeton non fongible, ou NFT (non-fongible token), est un type de jeton cryptographique transférable sur une blockchain, au même titre qu'un jeton fongible, mais unique et donc non-interchangeable.

On appelle « mint » l'action de création d'un jeton fongible, généralement au moyen d'un contrat intelligent (« smart contract ») sur la chaîne de blocs, par exemple conformément à la norme ERC-20 sur une blockchain Ethereum.

Similairement, on appelle « burn » l'action de destruction d'un jeton fongible, par les mêmes moyens.

On va à présent décrire deux alternatives possibles du présent procédé, selon si on utilise les premiers jetons fongibles vCoin1 ou les seconds jetons fongibles vCoin2. Comme l'on verra il est possible et même très avantageux d'utiliser à la fois les types de jetons fongibles.

Dans tous les cas le présent procédé est mis en œuvre principalement par les moyens de traitement de données 31 du serveur 3, mais également en partie par les moyens de traitement de données 11, 21 des deux équipements 1, 2.

### Procédé - cas des premiers jetons fongibles vCoin1

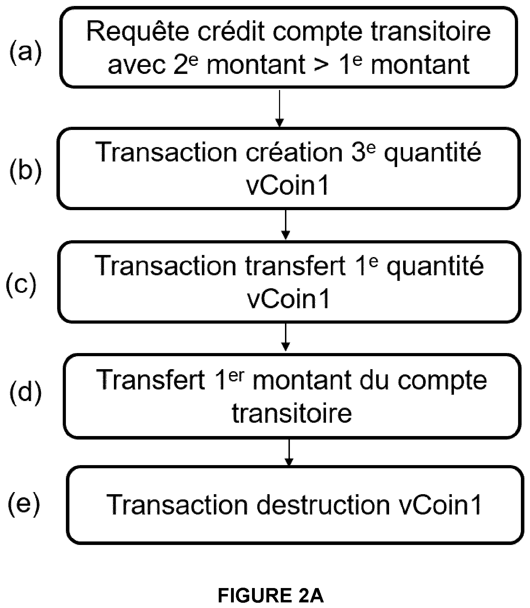

En référence à la **figure 2a,** dans cette première variante le procédé commence par une étape (a) d'émission depuis le premier équipement 1 du premier utilisateur d'une requête de crédit (i.e. de remplissage) d'un compte transitoire géré par le serveur 3, à hauteur d'un deuxième montant en ladite monnaie fiduciaire supérieur ou égal audit premier montant.

On comprend ici qu'il s'agit juste de déplacer de l'argent vers ledit compte transitoire, de manière simple : il n'y a aucun achat de jeton, on ne change pas de devise. L'idée est juste de réserver au moins le premier montant pour s'assurer que le premier utilisateur est en capacité de réaliser la transaction, voire si on le souhaite de garantir que le premier utilisateur ne soit pas à découvert ou du moins que son compte ne présente pas un solde en dessous d'une limite prédéfinie.

D'un compte de vue comptable, l'argent transféré sur le compte transitoire est toujours au premier utilisateur : si la transaction est finalement abandonnée il récupère automatiquement cet argent (aux éventuels frais près). Cette solution est donc sécurisante pour le premier utilisateur, qui ne prend pas de risque à créditer le compte transitoire, contrairement au cas où il devrait acheter une cryptomonnaie. Le compte transitoire peut être vu comme un compte de séquestre, et il a préférentiellement une durée de vie limitée, par exemple endéans un jour ouvrable soit au maximum 24 heures (durée maximum au bout de laquelle l'argent qu'il contient doit avoir été transféré à un autre utilisateur, ou sinon rendu au premier utilisateur). Le compte transitoire est un compte du premier utilisateur. En d'autres termes, le compte transitoire appartient au premier utilisateur. L'argent sur le compte transitoire appartient toujours au premier utilisateur, même en étant sur le compte transitoire. Le compte transitoire n'est pas le compte d'une entité autre que le premier utilisateur. Par exemple, le compte transitoire n'est pas le compte d'un dépositaire (custodian en anglais).

Généralement, le deuxième montant est identique au premier montant, mais peut être beaucoup plus élevé si par exemple on souhaite faire plusieurs transactions à la suite. Il peut y avoir en outre des frais bancaires, le deuxième montant étant alors l'argent effectivement transféré par le premier utilisateur moins lesdits frais.

Cette étape peut être faite de nombreuses manières :
- par virement depuis le premier compte du premier utilisateur une fois la transaction requise
- de manière anticipée en « pré-chargeant » le compte transitoire avant une ou plusieurs transactions, éventuellement pour une durée maximum prédéterminée telle que 24h, (voir plus loin)
- par paiement par tout autre moyen (carte bancaire, schéma de paiement automatisé comme PayPal, ApplePay, etc.)
- par prélèvement sur le compte du premier utilisateur si le tiers de confiance (opérant le serveur 3) dispose d'un mandat type SEPA
- etc.

On note même que l'étape (a) peut être mise en œuvre en plusieurs fois (par exemple avec des virements issus de plusieurs comptes du premier utilisateur), le deuxième montant étant alors la somme des montants indépendamment crédités.

Ainsi, le deuxième montant peut être plus élevé que le premier montant. De telle sorte, l'utilisateur peut provisionner de l'argent sur le compte transitoire sans avoir à connaître précisément le premier montant. L'utilisateur ne provisionne pas nécessairement exactement le premier montant. Cela permet une grande souplesse dans la mise en œuvre du procédé. En effet, dans la mesure où le compte transitoire est bien à l'utilisateur, l'argent qui y transite est toujours à lui et il n'y a donc aucun problème à y mettre plus que le premier montant.

De manière préférée, l'étape (a) comprend, avant ou après ledit crédit du compte transitoire, la validation de la transaction (i.e. du premier montant et de l'objet de la transaction) par chacun du premier et du deuxième utilisateur respectivement sur le premier et le deuxième équipement 1, 2.

Cela pourra être effectué de toute manière connue, en utilisant par exemple des plateformes de négociation existantes, respectant préférentiellement l'ensemble des obligations réglementaires, notamment en termes de lutte contre le blanchiment d'argent (« AML ») et les obligations de connaissance du client (« KYC »).

Par exemple, le premier utilisateur peut valider son achat sur son équipement 1, puis le deuxième utilisateur confirme l'achat du premier utilisateur sur son équipement 2.

Cette phase peut notamment comprendre l'authentification du premier utilisateur sur le premier équipement 1 et l'authentification du deuxième utilisateur sur le deuxième équipement 2 (notamment par saisie d'un code ou en utilisant des moyens d'acquisition biométrique de l'équipement 1, 2), de sorte à confirmer le consentement des premier et deuxième utilisateurs à mettre en œuvre ladite transaction dudit premier montant en la monnaie fiduciaire.

Selon un premier mode de réalisation, on commence par valider la transaction (i.e. l'émission de ladite requête de crédit est déclenchée par les authentifications des premier et deuxième utilisateurs et le premier montant est égal au deuxième montant). Alors le deuxième montant correspond généralement au premier montant. L'utilisateur a la possibilité de payer conformément au présent procédé (il peut choisir plusieurs modes de paiement), et s'il le choisit il est renvoyé sur une page lui permettant d'émettre ladite requête de crédit. Le cas échéant les éventuels frais sont automatiquement ajoutés au premier montant. Par exemple, en supposant que l'utilisateur valide une transaction d'un premier montant de 1000€, s'affichera une page lui demandant de confirmer un virement ou prélèvement de 1000,50€, avec soit 1000€ transférés sur le compte transitoire et 50cts directement prélevés en tant que frais bancaire (au profit du tiers de confiance opérant le serveur 3), soit 1000,50€ transférés et 50cts récupérés ultérieurement (on verra des exemples plus loin). On note que le deuxième montant est toujours de 1000€ et non 1000,50€, les frais venant en sus (en effet il ne faut pas pouvoir tomber en dessous du premier montant). Alternativement le virement peut être initié par l'utilisateur (le cas échéant manuellement) auprès de sa banque, l'utilisateur étant par exemple redirigé vers l'application de sa banque, en général dite « eBanking » afin de valider le dit virement initié couvrant le deuxième montant et les éventuels frais bancaires. On peut prévoir que le premier utilisateur dispose d'un temps limité pour mettre en œuvre ladite requête de crédit, sinon la transaction est annulée. On répète qu'il est possible que les éventuels frais soient à la charge du vendeur voire qu'il n'y ait aucun frais. Si jamais ladite requête de crédit était tardive (i.e. quand même mise en œuvre mais après le temps limité, donc lorsque la transaction est déjà annulée), le deuxième montant est remboursé, voir l'étape (e) plus loin.

Selon un deuxième mode de réalisation, l'émission de ladite requête de crédit est mise en œuvre de manière anticipée, i.e. le compte transitoire est déjà approvisionné lorsque l'utilisateur valide la transaction (on suppose suffisamment, i.e. d'un deuxième montant supérieur ou égal au premier montant - sinon la transaction est annulée). L'étape (b) suivante est directement déclenchée par les authentifications des premier et deuxième utilisateurs.

En effet la validation de la transaction vaut confirmation que le solde peut être utilisé à cet effet. Par exemple, en supposant que l'utilisateur a crédité le compte transitoire à hauteur de 2000€ et valide une transaction d'un premier montant de 1000€ avec 50cts de frais bancaire, seront automatiquement affectés 1000,50€ dudit compte transitoire.

Ensuite, dans une étape (b) principale, le procédé comprend la mise en œuvre par ledit serveur 3 d'une transaction sur ladite base de données de type chaine de blocs de création au profit du premier utilisateur d'une troisième quantité du premier jeton fongible transférable dans ladite base de données de type chaine de blocs (vCoin1).

Par création on entend le « mint », i.e. comme expliqué la génération pure et simple des vCoin1, et non leur transfert ou leur acquisition. Les jetons sont au profit du premier utilisateur, ce qui signifie qu'ils apparaissent dans le wallet du premier utilisateur. Ce sont avantageusement des jetons verrouillés, ou « gelés », c'est à-dire qu'il ne peuvent être transférés ou utilisés par le premier utilisateur, d'où leur nom de vCoin-L pour locked.

Ladite troisième quantité dudit premier jeton fongible est entre une première quantité correspondante audit premier montant et une deuxième quantité correspondante audit deuxième montant, avantageusement égale à la deuxième quantité. Par « entre », il est entendu que la troisième quantité peut être différente de la première quantité, différente de la deuxième quantité, égale à la première quantité et/ou égale à la deuxième quantité.

Pour reformuler il faut mint un nombre de jetons couvrant au moins le premier montant de la transaction, mais inférieur au solde du compte transitoire (le deuxième montant). On note que si premier montant = deuxième montant, alors automatiquement première quantité = deuxième quantité = troisième quantité.

Par quantité « correspondant à un montant », on entend selon une « valeur » prédéfinie dudit jeton fongible.

Par exemple on peut arbitrairement définir qu'un vCoin1 représente 1€. Dans la mesure où ces jetons sont des technical tokens qui n'ont pas de cours ailleurs, cette valeur importe peu. On rappelle qu'ils n'ont en pratique aucune valeur.

Ainsi, en supposant une transaction à 1000€ avec 2000€ sur le compte transitoire, on mint entre 1000 et 2000 vCoins1. A noter qu'on peut prévoir de mint en plus des jetons qui représentent les frais si ceux-ci n'ont pas été prélevés plus tôt, par exemple 0.5 vCoin1 dans notre exemple.

Comme expliqué on peut prévoir que la troisième quantité est égale à la première quantité, ce qui permet de créer juste le nombre adéquat de tokens et de prévenir totalement la fraude. Alternativement, on peut prévoir que la troisième quantité est égale à la deuxième quantité, ce qui permet de « dupliquer » le solde du compte transitoire. On peut également prévoir tout entre deux.

On comprend ici que ce mint est sans contrepartie. Cela signifie qu'à l'issue de l'étape (b), de manière très originale on a la fois de la monnaie fiduciaire dans le compte transitoire, et des jetons dans le portefeuille du premier utilisateur, ces derniers représentant le montant de la monnaie fiduciaire dans le compte transitoire.

Cela est contre-intuitif, car on peut avoir l'impression d'avoir de l'argent « en double », mais permet la souplesse et l'efficacité du présent procédé. On remarque que l'utilisateur n'a accès ni à l'argent dans le compte transitoire, ni aux tokens dans son portefeuille, de sorte qu'il n'y a pas de risque de fraude. On note qu'une telle duplication serait absolument impossible si les jetons étaient des monnaies fiduciaires tokenisées ou des cryptomonnaies.

Cette étape (b) peut être mise en œuvre au moyen d'un contrat intelligent comme expliqué. Si le compte transitoire n'a pas été assez approvisionné (par exemple, pour une transaction à 1000€ il n'a viré que 500€), alors l'étape (b) échoue et les tokens ne sont pas créés. On peut prévoir que les frais bancaires ne sont pas remboursés. Alternativement, on peut proposer d'aller chercher la différence, i.e. de mettre en œuvre une nouvelle occurrence de l'étape (a), notée (a'), d'émission depuis le premier équipement 1 d'une nouvelle requête de crédit du compte transitoire, à hauteur d'au moins la différence entre le deuxième montant et le premier montant.

Alors, en supposant que les tokens aient pu être créés, le procédé comprend une étape (c) de mise en œuvre par ledit serveur 3 d'une transaction sur ladite base de données de type chaine de blocs de transfert, du premier utilisateur vers le deuxième utilisateur, de ladite première quantité dudit premier jeton fongible.

En effet, on a créé au moins ladite première quantité et on peut donc la transférer vers le wallet du deuxième utilisateur, ce qui permet à ce dernier d'avoir la garantie que le premier utilisateur est bien en mesure de le payer à hauteur du premier montant, et de créer une trace de cette transaction dans la blockchain.

Si la troisième quantité est supérieure à la première quantité (par exemple on a mint 1500 tokens pour une transaction à 1000€), alors un nombre de token égal à la différence entre la première et la troisième quantité reste dans le wallet du premier utilisateur.

Cette étape (c) peut à nouveau être mise en œuvre via un contrat intelligent.

A noter que si des jetons correspondant aux frais ont été également mint, ladite transaction de l'étape (c) est également une transaction de de transfert, vers un portefeuille du tiers de confiance (au profit duquel les frais sont collectés), de ces jetons correspondant aux frais.

A ce stade, l'argent dans le compte transitoire est toujours en attente. Alors, le procédé comprend une étape (d) de transfert par le serveur 3 dudit premier montant en ladite monnaie fiduciaire depuis ledit compte transitoire vers un compte du deuxième utilisateur. Plus précisément, il s'agit de transférer un montant en la monnaie fiduciaire correspondant à la quantité de jetons reçue. Or cette quantité est la première quantité, de sorte que le montant qui doit être transféré est bien le premier montant. Cela est une sécurité supplémentaire contre d'autres éventuelles fraudes.

Ainsi, pour reprendre notre exemple, 1000 vCoins1 ont été transférés, de sorte que 1000€ sont transférés du compte transitoire vers le compte du deuxième utilisateur. A nouveau, toute technique de transfert d'argent pourra être utilisée, en particulier un simple virement, et le cas échéant des frais pourront être prélevés si à la charge du vendeur (par exemple seulement 999.50€ effectivement transférés sur le deuxième compte bancaire).

A ce stade, le deuxième utilisateur a à la fois les jetons et l'argent, de sorte qu'arrive une étape (e) de mise en œuvre par ledit serveur 3 d'une transaction sur ladite base de données de type chaine de blocs de destruction de ladite première quantité du premier jeton fongible transférée au deuxième utilisateur.

On rappelle que le premier jeton fongible (vCoin1) est un technical token n'ayant aucun cours, de sorte qu'on peut supprimer ladite première quantité (action dite de « burn »), pour garantir une absence totale de fraude.

De manière préférée les étapes (d) et (e) peuvent être simultanées ou du moins liées, pour garantir une sécurité totale.

A nouveau l'une et/ou l'autre de ces étapes peuvent être mises en œuvre au moyen d'un smart contract adapté.

A ce stade, si la troisième quantité est différente de la première quantité et/ou de la deuxième quantité il reste des premiers jetons dans le portefeuille du premier utilisateur et/ou de l'argent dans le compte transitoire.

Par exemple, s'il y avait 2000€ sur le compte transitoire, 1500 premiers jetons mint, pour un premier montant de 1000€, il reste 1000€ sur le compte transitoire et 500 premiers jetons dans le premier wallet (si on ne considère pas de frais).

A ce titre, l'étape (e) peut comprendre en outre, si le deuxième montant est strictement supérieur au premier montant (ou de manière équivalente si la deuxième quantité est strictement supérieure à la première quantité), le transfert (recrédit) par le serveur 3 de la différence entre les premier et deuxième montants en ladite monnaie fiduciaire (i.e. le reliquat) depuis ledit compte transitoire vers un compte du premier utilisateur, toujours à des éventuels frais près.

Ainsi dans notre exemple les 1000€ vont être retransférés sur le compte bancaire du premier utilisateur.

Alternativement, et notamment dans un mode dans lequel le compte transitoire peut être chargé de manière anticipée, il n'y a pas de recrédit immédiat, mais au bout d'une période de temps donnée qui se termine par exemple à la fin du jour ouvrable courant, soit au maximum 24h, ce qui laisse la possibilité à l'utilisateur de mettre en œuvre plusieurs transactions successives. A la fin, le reliquat, c'est-à-dire la différence entre tous les deuxièmes montants et tous les premiers montants, est recrédité.

Si la transaction n'a pas pu avoir lieu pour quelque raison que ce soit, par exemple en cas de requête de crédit tardive ou d'incident technique lors des étapes (b) et (c), il y a à ce stade toujours le deuxième montant sur le compte transitoire, et similairement on peut prévoir que le reliquat (i.e. ce deuxième montant) est recrédité immédiatement ou à la fin de la période de temps donnée selon le mode de fonctionnement.

En ce qui concerne les éventuels premiers jetons en surnombre (si la troisième quantité est strictement supérieure à la première quantité), l'étape (e) comprend avantageusement la mise en œuvre par ledit serveur 3 d'une transaction sur ladite base de données de type chaine de blocs de destruction de la différence entre les première et troisième quantités du premier jeton fongible qui reste au premier utilisateur (i.e. le reliquat de son wallet).

Cette transaction peut être concomitante avec celle de destruction des jetons transférés, l'idée est qu'il n'y ait plus de premier jeton, ni chez le premier utilisateur, ni chez le deuxième utilisateur.

A noter que l'étape (e) peut comprendre l'envoi par le serveur 3 d'une notification au deuxième équipement 2, pour informer le deuxième utilisateur que la transaction est réussie, i.e. qu'il a bien reçu dans son compte le premier montant (le cas échéant moins les éventuels frais), sans coûts inutiles et sans risques. Grâce aux premiers jetons fongibles, la transaction est par ailleurs inscrite de manière incontestable dans la blockchain
Alors, le procédé peut comprendre une éventuelle étape (f) finale de mise en œuvre d'une action par ledit deuxième utilisateur en contrepartie de la transaction (du paiement du premier montant).

Comme expliqué la transaction peut être un simple transfert d'argent sans contrepartie explicite, mais le plus souvent il s'agit d'un paiement lors d'un achat de sorte que ladite action est la fourniture du produit ou service acheté.

Dans le cas où l'objet de la transaction est un actif numérique tel qu'un NFT, l'étape (f) comprend la mise en œuvre d'une transaction sur une base de données de type chaine de blocs de transfert (généralement différente de la blockchain sur laquelle sont transférables les premiers jetons fongible), du deuxième utilisateur vers le premier utilisateur, dudit actif numérique.

De manière préférée, il est possible dans ce cas d'actif numérique de mettre en œuvre l'étape (f) en même temps que l'étape (e), voire l'étape (c) (au moyen du même smart contract), c'est ce que l'on appelle un swap (échange sur la blockchain).

A noter qu'on peut prévoir de verrouiller l'actif numérique (de la même manière que les vCoins1) dès l'étape (b) et de le déverrouiller seulement à la fin de l'étape (e) de sorte que le premier utilisateur n'ait pas accès à l'actif numérique avant que le deuxième utilisateur ait récupéré le premier montant.

### Procédé - cas des deuxièmes jetons fongibles vCoin2

Alternativement ou en complément aux vCoin1, on peut avoir un deuxième jeton fongible noté vCoin2, avantageusement transférable sur la même blockchain, et également de type technical token. En d'autre termes, chaque deuxième token représente à nouveau une valeur arbitraire prédéfinie (avantageusement la même qu'un premier jeton fongible, i.e. un vCoin1 = un vCoin2 = 1€) mais ne peut pas être échangée de manière libre avec de la monnaie fiduciaire.

Les deux types de jetons peuvent être en pratique équivalents, ce qui va différer est leur principe de création, et en particulier leur quantité.

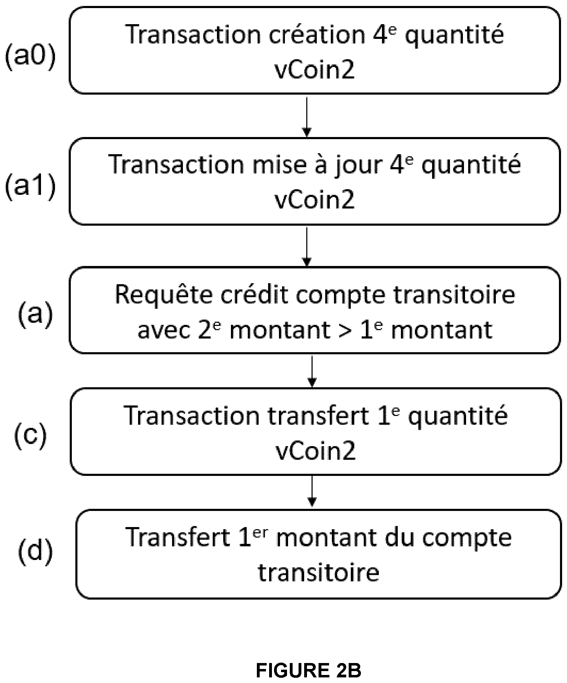

En effet, en référence à la **figure 2b,** dans cette première variante le procédé commence directement par une étape (a0) de mise en œuvre par ledit serveur 3 d'une transaction sur ladite base de données de type chaine de blocs de création au profit du premier utilisateur d'une quatrième quantité d'un deuxième jeton fongible transférable dans ladite base de données de type chaine de blocs, ladite quatrième quantité correspondant à un solde d'un compte bancaire dudit premier utilisateur.

En d'autres termes, la quatrième quantité est le « miroir » du compte bancaire du premier utilisateur : s'il a 1456€ sur son compte, seront mint 1456 deuxièmes jetons. On vient donc comme dans la première variante faire coexister la monnaie fiduciaire et les jetons, il n'y a aucun échange.

Pour reformuler, avant même le crédit du compte transitoire on « duplique » l'argent du premier utilisateur, ce qui ne pose pas de problème car les deuxièmes jetons ne sont pas échangeables librement.

A noter que le premier utilisateur peut avoir plusieurs comptes bancaires, et on fait comme si il avait un seul compte ayant pour solde la somme des soldes de ses différents comptes, car la monnaie fiduciaire est elle-même fongible et l'argent pour la transaction peut tout à fait venir de plusieurs comptes à la fois.

L'étape (a0), qui est équivalente à l'étape (b) de la première variante du procédé, peut être mise en œuvre à l'inscription du premier utilisateur au service de transactions conformément au présent procédé, par exemple au téléchargement d'une application sur son premier équipement 1, et en tout cas avant l'étape (a).

L'étape (a0) peut comprendre une demande d'accès du serveur 3 (directement ou via le premier équipement 1) audit compte du premier utilisateur, car il est nécessaire de connaître le solde de son compte.

De manière préférée, le procédé comprend en outre le cas échéant une ou plusieurs occurrences d'une étape (a1) de mise en œuvre par ledit serveur 3 d'une transaction sur ladite base de données de type chaine de blocs de mise à jour de ladite quatrième quantité du deuxième jeton fongible du premier utilisateur, de sorte à correspondre au solde du compte bancaire dudit premier utilisateur.

En effet le solde peut varier, et par mise à jour on entend mint ou burn de deuxièmes jetons de sorte à s'adapter au nouveau solde : s'il a augmenté on mint de nouveaux deuxièmes jetons, et s'il a baissé on burn des jetons. Mais à ce stade, aucun transfert des vCoin2 n'est possible.

L'étape (a1) peut être mise en œuvre via le premier équipement 1 qui va transmettre au serveur 3 (en temps réel ou de manière périodique) les informations relatives aux variations du solde, ou bien le serveur 3 va lui-même régulièrement interroger le compte bancaire du premier utilisateur.

Techniquement, on pourra utiliser pour les étapes (a0)/(a1) l'API AIS (Account Information Service) ou tout autre technique le permettant.

Ainsi, on suppose qu'à l'issue des étapes (a0)/(a1) la quatrième quantité de deuxièmes jetons du premier utilisateur est fidèle au solde de son compte bancaire. Ce mode de réalisation empêche ainsi toute opération à découvert puisqu'il est physiquement impossible d'obtenir et donc de transférer une quantité de jetons correspondant à un montant supérieur dans la monnaie fiduciaire.

A noter que ces étapes peuvent être mises en œuvre pour chaque utilisateur et pas seulement le premier utilisateur : le deuxième utilisateur peut lui-même, avant la transaction, disposer d'une quantité de vCoins2 correspondant au solde de son propre compte bancaire.

Peut alors avoir lieu l'étape (a) d'émission depuis le premier équipement 1 du premier utilisateur d'une requête de crédit (i.e. de remplissage) du compte transitoire géré par le serveur 3, à hauteur d'un deuxième montant en ladite monnaie fiduciaire supérieur ou égal audit premier montant.

Cette étape pourra être mise en œuvre exactement dans les mêmes conditions que dans la première variante du procédé, en particulier par virement depuis le premier compte du premier utilisateur une fois la transaction requise ou de manière anticipée, ou encore par prélèvement sur le compte du premier utilisateur si le tiers de confiance (opérant le serveur 3) dispose d'un mandat type SEPA.

L'étape (a) peut à nouveau comprendre, avant ou après ledit crédit du compte transitoire, la validation de la transaction (i.e. du premier montant et de l'objet de la transaction) par chacun du premier et du deuxième utilisateur respectivement sur le premier et le deuxième équipement 1, 2 ; et notamment comprendre l'authentification du premier utilisateur sur le premier équipement 1 et l'authentification du deuxième utilisateur sur le deuxième équipement 2, de sorte à confirmer le consentement des premier et deuxième utilisateurs à mettre en œuvre ladite transaction dudit premier montant en la monnaie fiduciaire.

On note que comme expliqué, d'un point de vue comptable, l'argent transféré sur le compte transitoire est toujours au premier utilisateur (si la transaction est finalement abandonnée il récupère automatiquement cet argent, aux éventuels frais près), de sorte que l'argent sur ce compte transitoire est considéré comme faisant toujours partie du solde du premier utilisateur (i.e. le transfert du deuxième montant ne diminue pas d'autant la quatrième quantité de deuxième jetons - seuls les éventuels frais sont retranchés).

On passe ensuite directement à l'étape (c) de mise en œuvre par ledit serveur 3 d'une transaction sur ladite base de données de type chaine de blocs de transfert, du premier utilisateur vers le deuxième utilisateur, d'une cinquième quantité dudit deuxième jeton fongible correspondant au premier montant, et en pratique égale à la première quantité du premier jeton fongible (lorsque les deux jetons représentent la même valeur).

Mathématiquement, la quatrième quantité est supérieure à la deuxième quantité correspondant au deuxième montant (car l'utilisateur n'a pas pu transférer de l'argent qu'il n'avait pas) elle-même supérieure à la cinquième quantité, de sorte qu'on a l'assurance que le wallet du premier utilisateur contient au moins la cinquième quantité et on peut donc la transférer vers le wallet du deuxième utilisateur, ce qui permet à ce dernier d'avoir la garantie que le premier utilisateur est bien en mesure de le payer à hauteur du premier montant, et de créer une trace de cette transaction dans la blockchain. En tout état de cause, même si un attaquant parvenait à déclencher la transaction sans avoir un solde suffisant (avec un deuxième montant d'argent crédité sur le compte transitoire inférieur au premier montant ou de l'argent d'origine frauduleuse sur ce compte transitoire), le transfert de deuxième jetons échouerait car il n'y aurait pas la cinquième quantité disponible.

Si la quatrième quantité est supérieure à la première quantité (par exemple, si le solde est 1456€ on a mint 1456 vCoins2 pour une transaction à 1000€ et 1000 vCoins2 ont été transférés), alors un nombre de jetons égal à la différence entre la première et la quatrième quantité reste dans le wallet du premier utilisateur (456 vCoins2 ici).

Cette étape (c) peut à nouveau être mise en œuvre via un contrat intelligent.

A ce stade, l'argent dans le compte transitoire est toujours en attente. Alors, le procédé comprend similairement à la première variante l'étape (d) de transfert par le serveur 3 dudit premier montant en ladite monnaie fiduciaire depuis ledit compte transitoire vers un compte du deuxième utilisateur. Plus précisément, il s'agit de transférer un montant en la monnaie fiduciaire correspondant à la quantité de jetons reçue. Or cette quantité est la première quantité, de sorte que le montant qui doit être transféré est bien le premier montant. Cela est une sécurité supplémentaire contre d'autres éventuelles fraudes.

Ainsi, pour reprendre notre exemple, 1000 vCoins2 ont été transférés, de sorte que 1000€ sont transférés du compte transitoire vers le compte du deuxième utilisateur. A nouveau, toute technique de transfert d'argent pourra être utilisée, en particulier un simple virement, et le cas échéant des frais pourront être prélevés si à la charge du vendeur (par exemple seulement 999.50€ effectivement transférés sur le deuxième compte bancaire).

A ce stade, on pourrait procéder comme dans la première variante à une étape (e) de mise en œuvre par ledit serveur 3 d'une transaction sur ladite base de données de type chaine de blocs de destruction de ladite première quantité du deuxième jeton fongible transférée au deuxième utilisateur et/ou de destruction des deuxièmes jetons fongibles en surnombre du premier utilisateur, mais c'est en pratique inutile, du fait de la nature astucieuse des deuxièmes jetons fongibles.

On rappelle que la quantité de deuxième jeton fongible (vCoin2) est un miroir du solde du compte : à la prochaine occurrence de l'étape (a1), les quantités de deuxième jetons des premier et deuxième utilisateurs vont être automatiquement mises à jour :
- l'argent sorti du compte transitoire n'est plus au solde du premier utilisateur, qui baisse donc du premier montant : on note que du fait de l'étape (c) la quantité de deuxièmes jetons détenue par le premier utilisateur a normalement déjà diminué de manière équivalente
- cet argent est à présent sur le compte du deuxième utilisateur, dont le solde augmente donc du premier montant : on note que du fait de l'étape (c) la quantité de deuxièmes jetons a normalement déjà augmenté de manière équivalente.

En résumé, à la fin de l'étape (d) chacun de premier et du deuxième utilisateur dispose normalement automatiquement de la quantité de deuxième jetons correspondant au solde de son compte.

On note que cela peut être à des éventuels frais près, mais dans tous les cas à la prochaine occurrence de l'étape (a1), les quantités de deuxièmes jetons seront corrigées en conséquence ;
Par contre, de manière préférée, l'étape (e) comprend toujours, si le deuxième montant est strictement supérieur au premier montant (ou de manière équivalente si la deuxième quantité est strictement supérieure à la première quantité), le transfert (recrédit) par le serveur 3 de la différence entre les premier et deuxième montants en ladite monnaie fiduciaire (i.e. le reliquat) depuis ledit compte transitoire vers un compte du premier utilisateur, toujours à des éventuels frais près.

Alternativement, et notamment dans un mode dans lequel le compte transitoire peut être chargé de manière anticipée, il n'y a pas de recrédit immédiat, mais au bout d'une période de temps donnée, par exemple 24h, ce qui laisse la possibilité à l'utilisateur de mettre en œuvre plusieurs transactions successives. A la fin, le reliquat, c'est-à-dire la différence entre tous les deuxièmes montants et tous les premiers montants, est recrédité.

Enfin l'étape (e) peut à nouveau comprendre l'envoi par le serveur 3 d'une notification au deuxième équipement 2 pour informer le deuxième utilisateur que la transaction est réussie, i.e. qu'il a bien reçu dans son compte le premier montant (le cas échéant moins les éventuels frais), sans coûts inutiles et sans risques. Grâce aux deuxièmes jetons fongibles, la transaction est par ailleurs inscrite de manière incontestable dans la blockchain

Alors, le procédé peut comprendre l'éventuelle étape (f) finale de mise en œuvre d'une action par ledit deuxième utilisateur en contrepartie de la transaction (du paiement du premier montant) dans les mêmes conditions que pour la première variante, et dans le cas où l'objet de la transaction est un actif numérique tel qu'un NFT, l'étape (f) peut comprendre la mise en œuvre d'une transaction sur une base de données de type chaine de blocs de transfert (généralement différente de la blockchain sur laquelle sont transférables les deuxièmes jetons fongibles), du deuxième utilisateur vers le premier utilisateur, dudit actif numérique.

En résumé, dans le cas de la deuxième variante le procédé pour la mise en œuvre d'une transaction d'un premier montant en une monnaie fiduciaire entre un premier utilisateur et un deuxième utilisateur, comprend la mise en œuvre d'étapes de :
(a0) Mise en œuvre par un serveur 3 d'une transaction sur une base de données de type chaine de blocs de création au profit du premier utilisateur d'une quatrième quantité d'un deuxième jeton fongible transférable dans ladite base de données de type chaine de blocs, ladite quatrième quantité dudit deuxième jeton fongible correspondant à un solde d'un compte bancaire dudit premier utilisateur ;
(a1) optionnellement, si ledit solde du compte bancaire dudit premier utilisateur a varié, mise en œuvre par ledit serveur 3 d'une transaction sur ladite base de données de type chaine de blocs de mise à jour de ladite quatrième quantité du deuxième jeton fongible du premier utilisateur, de sorte à correspondre au solde du compte bancaire dudit premier utilisateur ;
(a) Emission depuis un premier équipement 1 du premier utilisateur connecté au serveur 3 par un réseau 30 d'une requête de crédit d'un compte transitoire géré par le serveur 3, à hauteur d'un deuxième montant en ladite monnaie fiduciaire supérieur ou égal audit premier montant (et en pratique tel que la deuxième quantité correspondante à ce deuxième montant est inférieure ou égal à ladite quatrième quantité) ;
(c) Mise en œuvre par ledit serveur 3 d'une transaction sur ladite base de données de type chaine de blocs de transfert, du premier utilisateur vers le deuxième utilisateur, d'une cinquième quantité dudit deuxième jeton fongible correspondant au premier montant ;
(d) Transfert par le serveur 3 dudit premier montant en ladite monnaie fiduciaire depuis ledit compte transitoire vers un compte du deuxième utilisateur.

De manière préférée, il est comme expliqué possible de cumuler les premiers et deuxièmes jetons pour une sécurité maximale :
- les premiers jetons sont verrouillés et ont une existence très brève qui prévient toute fraude
- les deuxièmes jetons sont liés au solde du compte bancaire du premier utilisateur et préviennent toute tentative de paiement à découvert.

En résumé, dans le cas où l'on cumule ces deux variantes, le procédé pour la mise en œuvre d'une transaction d'un premier montant en une monnaie fiduciaire entre un premier utilisateur et un deuxième utilisateur, comprend la mise en œuvre d'étapes de :
(a0) Mise en œuvre par un serveur 3 d'une transaction sur une base de données de type chaine de blocs de création au profit du premier utilisateur d'une quatrième quantité d'un deuxième jeton fongible transférable dans ladite base de données de type chaine de blocs, ladite quatrième quantité dudit deuxième jeton fongible correspondant à un solde d'un compte bancaire dudit premier utilisateur ;
(a1) optionnellement, si ledit solde du compte bancaire dudit premier utilisateur a varié, mise en œuvre par ledit serveur 3 d'une transaction sur ladite base de données de type chaine de blocs de mise à jour de ladite quatrième quantité du deuxième jeton fongible du premier utilisateur, de sorte à correspondre au solde du compte bancaire dudit premier utilisateur ;
(a) Emission depuis un premier équipement 1 du premier utilisateur connecté au serveur 3 par un réseau 30 d'une requête de crédit d'un compte transitoire géré par le serveur 3, à hauteur d'un deuxième montant en ladite monnaie fiduciaire supérieur ou égal audit premier montant ;
(b) Mise en œuvre par ledit serveur 3 d'une transaction sur une base de données de type chaine de blocs de création au profit du premier utilisateur d'une troisième quantité d'un premier jeton fongible transférable dans ladite base de données de type chaine de blocs, ladite troisième quantité dudit premier jeton fongible étant entre une première quantité correspondant audit premier montant et une deuxième quantité correspondant audit deuxième montant ;
(c) Mise en œuvre par ledit serveur 3 d'une transaction sur ladite base de données de type chaine de blocs de transfert, du premier utilisateur vers le deuxième utilisateur, de ladite première quantité dudit premier jeton fongible et d'une cinquième quantité dudit deuxième jeton fongible correspondant également audit premier montant de ladite première quantité (préférentiellement dans la même transaction) ;
(d) Transfert par le serveur 3 dudit premier montant en ladite monnaie fiduciaire depuis ledit compte transitoire vers un compte du deuxième utilisateur ;
(e) Mise en œuvre par ledit serveur 3 d'une transaction sur ladite base de données de type chaine de blocs de destruction de ladite première quantité du jeton fongible transférée au deuxième utilisateur.

### Serveur

Selon un deuxième aspect, l'invention concerne le serveur 3 pour la mise en œuvre du procédé selon le premier aspect.

Le serveur 3, d'un tiers de confiance, pour des transactions en monnaie fiduciaire, comprend des moyens de traitement de données 31 et des moyens de stockage de données 32.

Selon la première variante, les moyens de traitement de données 31 sont configurés pour :
- suite à l'émission depuis un premier équipement 1 du premier utilisateur connecté audit serveur 3 par un réseau 30 d'une requête de crédit d'un compte transitoire géré par ledit serveur 3, à hauteur d'un deuxième montant en ladite monnaie fiduciaire supérieur ou égal audit premier montant, mettre en œuvre une transaction sur une base de données de type chaine de blocs de création au profit du premier utilisateur d'une troisième quantité d'un premier jeton fongible transférable dans ladite base de données de type chaine de blocs, ladite troisième quantité dudit premier jeton fongible étant entre une première quantité correspondant audit premier montant et une deuxième quantité correspondant audit deuxième montant ;
- mettre en œuvre une transaction sur ladite base de données de type chaine de blocs de transfert, du premier utilisateur vers le deuxième utilisateur, de ladite première quantité dudit premier jeton fongible ;
- transférer ledit premier montant en ladite monnaie fiduciaire depuis ledit compte transitoire vers un compte du deuxième utilisateur ;
- mettre en œuvre une transaction sur ladite base de données de type chaine de blocs de destruction de ladite première quantité du jeton fongible transférée au deuxième utilisateur.

Selon la deuxième variante, les moyens de traitement de données 31 sont configurés pour :
- mettre en œuvre une transaction sur une base de données de type chaine de blocs de création au profit du premier utilisateur d'une quatrième quantité d'un deuxième jeton fongible transférable dans ladite base de données de type chaine de blocs, ladite quatrième quantité dudit deuxième jeton fongible correspondant à un solde d'un compte bancaire dudit premier utilisateur
- suite à l'émission depuis un premier équipement 1 du premier utilisateur connecté audit serveur 3 par un réseau 30 d'une requête de crédit d'un compte transitoire géré par ledit serveur 3, à hauteur d'un deuxième montant en ladite monnaie fiduciaire supérieur ou égal audit premier montant, mettre en œuvre une transaction sur ladite base de données de type chaine de blocs de transfert, du premier utilisateur vers le deuxième utilisateur, d'une cinquième quantité dudit deuxième jeton fongible correspondant au premier montant ;
- transférer ledit premier montant en ladite monnaie fiduciaire depuis ledit compte transitoire vers un compte du deuxième utilisateur.

Selon un troisième aspect, l'invention concerne l'ensemble du serveur 3 selon le deuxième aspect et d'au moins un premier équipement client 1 du premier utilisateur, et avantageusement un deuxième équipement client 2 du deuxième utilisateur, connectés via ledit réseau 30.

Le premier équipement 1 est alors configuré pour émettre une requête de crédit d'un compte transitoire géré par ledit serveur 3, à hauteur d'un deuxième montant en ladite monnaie fiduciaire supérieur ou égal audit premier montant.

### Produit programme d'ordinateur

Selon un quatrième et un cinquième aspects, l'invention concerne un produit programme d'ordinateur comprenant des instructions de code pour l'exécution (sur les moyens de traitement de donnés 31 du serveur 3) d'un procédé selon le premier aspect pour la mise en œuvre d'une transaction d'un premier montant en une monnaie fiduciaire entre un premier utilisateur et un deuxième utilisateur ; et un moyen de stockage (par exemple les moyens de stockage de données 32 du serveur 3) sur lequel on trouve ce produit programme d'ordinateur.

## Revendications

1. Procédé pour la mise en œuvre d'une transaction d'un premier montant en une monnaie fiduciaire entre un premier utilisateur et un deuxième utilisateur, comprenant la mise en œuvre d'étapes de :
(a) Emission depuis un premier équipement (1) du premier utilisateur d'une requête de crédit d'un compte transitoire géré par un serveur (3) connecté au moins au premier équipement (1) par un réseau (30), à hauteur d'un deuxième montant en ladite monnaie fiduciaire supérieur ou égal audit premier montant ;
(b) Mise en œuvre par ledit serveur (3) d'une transaction sur une base de données de type chaine de blocs de création au profit du premier utilisateur d'une troisième quantité d'un premier jeton fongible transférable dans ladite base de données de type chaine de blocs, ladite troisième quantité dudit premier jeton fongible étant entre une première quantité correspondant audit premier montant et une deuxième quantité correspondant audit deuxième montant ;
(c) Mise en œuvre par ledit serveur (3) d'une transaction sur ladite base de données de type chaine de blocs de transfert, du premier utilisateur vers le deuxième utilisateur, de ladite première quantité dudit premier jeton fongible ;
(d) Transfert par le serveur (3) dudit premier montant en ladite monnaie fiduciaire depuis ledit compte transitoire vers un compte du deuxième utilisateur ;
(e) Mise en œuvre par ledit serveur (3) d'une transaction sur ladite base de données de type chaine de blocs de destruction de ladite première quantité du jeton fongible transférée au deuxième utilisateur.

2. Procédé selon la revendication 1, dans lequel l'étape (a) comprend l'authentification du premier utilisateur sur le premier équipement (1) et l'authentification du deuxième utilisateur sur un deuxième équipement (2) du deuxième utilisateur également connecté au premier équipement (1) via ledit réseau (30), de sorte à confirmer le consentement des premier et deuxième utilisateurs à mettre en œuvre ladite transaction dudit premier montant en la monnaie fiduciaire.

3. Procédé selon l'une des revendications 1 et 2, dans lequel ladite requête de crédit d'un compte transitoire géré par le serveur (3) est soit une requête de transfert dudit deuxième montant en la monnaie fiduciaire depuis un compte bancaire du premier utilisateur vers ledit compte transitoire, soit une requête de prélèvement par ledit serveur (3) dudit deuxième montant depuis ledit compte bancaire du premier utilisateur.

4. Procédé selon les revendications 2 et 3 en combinaison dans lequel soit l'émission de ladite requête de crédit est déclenchée par les authentifications des premier et deuxième utilisateurs et le deuxième montant est égal au premier montant, soit l'émission de ladite requête de crédit est mise en œuvre de manière anticipée et l'étape (b) est déclenchée par les authentifications des premier et deuxième utilisateurs.

5. Procédé selon l'une des revendication 1 à 4, dans lequel la troisième quantité est égale à la deuxième quantité.

6. Procédé selon l'une des revendications 1 à 5, dans lequel l'étape (e) comprend en outre, si le deuxième montant est strictement supérieur au premier montant, le transfert par le serveur (3) de la différence entre les premier et deuxième montants en ladite monnaie fiduciaire depuis ledit compte transitoire vers un compte du premier utilisateur.

7. Procédé selon l'une des revendications 1 à 6, dans lequel lesdits premiers jetons fongibles sont des jetons verrouillés pour les premier et deuxième utilisateurs.

8. Procédé selon l'une des revendications 1 à 7, comprenant une étape (a0) de mise en œuvre par ledit serveur (3) d'une transaction sur ladite base de données de type chaine de blocs de création au profit du premier utilisateur d'une quatrième quantité d'un deuxième jeton fongible transférable dans ladite base de données de type chaine de blocs, ladite quatrième quantité correspondant à un solde d'un compte bancaire dudit premier utilisateur ; l'étape (c) comprenant la mise en œuvre par ledit serveur (3) d'une transaction sur ladite base de données de type chaine de blocs de transfert, du premier utilisateur vers le deuxième utilisateur, d'une cinquième quantité dudit deuxième jeton fongible correspondant au premier montant.

9. Procédé selon la revendication 8, comprenant, si ledit solde du compte bancaire dudit premier utilisateur a varié, une étape (a1) de mise en œuvre par ledit serveur (3) d'une transaction sur ladite base de données de type chaine de blocs de mise à jour de ladite quatrième quantité du deuxième jeton fongible du premier utilisateur, de sorte à correspondre au solde du compte bancaire dudit premier utilisateur.

10. Procédé selon l'une des revendications 8 et 9, dans lequel l'étape (a0) comprend une demande d'accès du serveur (3) audit compte bancaire du premier utilisateur.

11. Procédé selon l'une des revendications 8 à 10, dans lequel ledit premier jeton fongible et ledit deuxième jeton fongible représentent la même valeur en ladite monnaie fiduciaire de sorte que la première quantité du premier jeton fongible est égale à la cinquième quantité du deuxième jeton fongible.

12. Procédé selon l'une des revendications 1 à 11, dans lequel au moins les étapes (b), (c) et (e) sont mises en œuvre au moyen d'un contrat intelligent.

13. Procédé selon l'une des revendications 1 à 11, comprenant la mise en œuvre d'une étape (f) de mise en œuvre d'une action par ledit deuxième utilisateur en contrepartie de la transaction.

14. Serveur (3), **caractérisé en ce qu'**il comprend des moyens de traitement de données (31) configurés pour, lors d'une transaction d'un premier montant en une monnaie fiduciaire entre un premier utilisateur et un deuxième utilisateur :
- suite à l'émission depuis un premier équipement (1) du premier utilisateur connecté audit serveur (3) par un réseau (30) d'une requête de crédit d'un compte transitoire géré par ledit serveur (3), à hauteur d'un deuxième montant en ladite monnaie fiduciaire supérieur ou égal audit premier montant, mettre en œuvre une transaction sur une base de données de type chaine de blocs de création au profit du premier utilisateur d'une troisième quantité d'un premier jeton fongible transférable dans ladite base de données de type chaine de blocs, ladite troisième quantité dudit premier jeton fongible étant entre une première quantité correspondant audit premier montant et une deuxième quantité correspondant audit deuxième montant ;
- mettre en œuvre une transaction sur ladite base de données de type chaine de blocs de transfert, du premier utilisateur vers le deuxième utilisateur, de ladite première quantité dudit premier jeton fongible ;
- transférer ledit premier montant en ladite monnaie fiduciaire depuis ledit compte transitoire vers un compte du deuxième utilisateur ;
- mettre en œuvre une transaction sur ladite base de données de type chaine de blocs de destruction de ladite première quantité du jeton fongible transférée au deuxième utilisateur.

15. Ensemble du serveur (3) selon la revendication 14 et du premier équipement (1) configuré pour émettre ladite requête de crédit d'un compte transitoire géré par ledit serveur (3), à hauteur du deuxième montant.

16. Produit programme d'ordinateur comprenant des instructions de code pour l'exécution d'un procédé selon l'une des revendications 1 à 13 pour la mise en œuvre d'une transaction d'un premier montant en une monnaie fiduciaire entre un premier utilisateur et un deuxième utilisateur, lorsque ledit programme est exécuté sur un ordinateur.

17. Moyen de stockage lisible par un équipement informatique sur lequel est enregistré un produit programme d'ordinateur comprenant des instructions de code pour l'exécution d'un procédé selon l'une des revendications 1 à 13 pour la mise en œuvre d'une transaction d'un premier montant en une monnaie fiduciaire entre un premier utilisateur et un deuxième utilisateur.
